Europäisches Patentamt

**European Patent Office**

**Office européen des brevets**

(19)

(11) Publication number: **0 031 239**
**A1**

(12) # EUROPEAN PATENT APPLICATION

(21) Application number: **80304546.7**

(22) Date of filing: **16.12.80**

(51) Int. Cl.³: **B 65 D 65/38**
**B 32 B 33/00**

(30) Priority: **19.12.79 GB 7943780**

(43) Date of publication of application:
**01.07.81 Bulletin 81/26**

(84) Designated Contracting States:
**BE CH DE GB IT LI NL**

(71) Applicant: **Danepak Limited**
**Caxton Way**
**Thetford Norfolk IP24 3SB(GB)**

(72) Inventor: **Hooper, Clive Williams**
**5 Rotherwick Way**
**Cambridge CB1 4RX(GB)**

(74) Representative: **Potter, Willoughby Whatnall et al,**
**ERIC POTTER & CLARKSON 14 Oxford Street**
**Nottingham NG1 5BP(GB)**

(54) **Package printing.**

(57) Information is applied to packaging material (12) for containing an article by printing the information onto the packaging material by the use of an energy source (2). The packaging material is provided with a medium which is inherently not discernable until such time as a source of energy is applied thereto whereupon the form of the material within the packaging material changes so that by appropriate means the information applied to that material may be read. Particularly the material applied to the packaging material may be inherently invisible and on the application of an energy source it becomes visible. The source of energy may be in the form of a laser (1) beam which is focused onto the material and focused in a manner to provide readable intelligence in the form of letters. Alternatively characters or other distinguishing marks may be applied.

FIG.1

EP 0 031 239 A1

1

## PACKAGE PRINTING

This invention is concerned with package printing and is particularly concerned with the printing of information onto a package which term as used herein comprises packaging material enclosing an article. The package which includes the packaging material and the article will be sold with the information and the invention is particularly concerned with packages which cannot readily have information applied to the packaging material prior to the insertion of the article into the packaging material. Instances of this kind occur where it is desirable to package an article and then subsequently apply additional information as for example date of despatch, a code number as to the place from which the article was distributed or stored or other information as to price and such like.

In the packaging of foodstuffs it is well known to insert a perishable foodstuff into packaging material forming an envelope, then to remove the air from the envelope and seal the foodstuff to form a package in which the foodstuff is vacuum sealed within the packaging material.

It may be desirable to state on the package the date on which the foodstuff was inserted into the envelope and/or the date on which it was placed into a store at a lower temperature. It may then be desirable to add further information to the package as to the price appertaining at the time of sale for the resale value of that package.

In the vacuum package and cold storage of articles, materials such as polythene and polyester are used as packaging materials which are difficult to print by

2

conventional printing processes.

The present invention has application to the printing of packages of vacuum packed perishable foodstuffs. The invention also has application to the marking or printing of other materials whether perishable or not and whether . vacuum packed or not, and whether subject to a cold store prior to sale or not. For example, the invention has application to the marking of pharmaceuticals in which a pharmaceutical powder or substance is enclosed within a capsule and it is desirable to mark the individual capsules with coded or other information and such marking or coding of the capsule may not be possible prior to the insertion of the pharmaceutical substance within said capsule.

While reference hitherto has been primarily to the printing of information on to packages containing perishable foodstuffs or pharmaceuticals, it will be appreciated the invention is equally applicable to the printing of information on to any article which is enclosed within a package and to which it is desirable to apply the information to the packaging material for that article as opposed to the article itself after the article has been placed or enclosed within the packaging material.

In circumstances such as that mentioned it has hitherto been the practice to apply a sticky or self-adhesive label to the exterior of the package, but by the present invention the packaging material is printed without damage being caused to the article within the packaging material.

The present invention provides a package comprising an article enclosed within packaging material characterised by a substance whose visual appearance may be varied on the application of quantity of energy being applied to said packaging material.

There are many ways of applying such a substance to the packaging material as for example by direct application to the exterior of the packaging material or in the case where the packaging material is formed of a laminate of different layers of materials, the said substance may be incorporated as a sandwich within said packaging material.

The source of energy according to the present invention may be a laser beam and it may be desirable to direct that laser mean onto said substance, such means for directing may include a pair of hinged mirrors which by appropriate manipulation may be adapted to provide writing in the form of readable intelligence onto the substance. Alternatively conventional bar coded information may be provided by said substance incorporated in the package. Conventional English or other language characters may also be written. In addition to a laser beam the energy source may be a luminous electric discharge through a gas.

Other sources of energy include a heat probe an ultrasonic applicator.

The substance which is capable of having its visual appearance varied may for example be hydrated ferric oxide which on the application of a source of energy will be turned to non-hydrated ferric oxide, so that the substance will change from a yellow to red. Alternatively, two or more substances of predetermined colour may be in layer form in the packaging material and by the application of the source of energy one or more of those colours may be removed leaving one of the others visible, thus forming a colour coded pattern.

The substance which varies its visual appearance may for example be a leuco dye which is encapsulated into a substance such as for example a gelatinic substance and on the application of the source of energy the gelatinic substance encapsulating the leuco dye is broken releasing the leuco dye so that that may then be visible to the eye.

In an alternative embodiment of this invention the energy source softens the surface of the packaging material to which is then applied a flock or other marking media.

The present invention also provides a method of marking or printing onto a package consisting of packaging material in which an article is located which comprises providing the packaging material with a substance whose visual appearance may be varied by the application of a

4

quantity of energy and applying said quantity of energy as specified to said substance in order to vary its visual appearance

Other known substances whose visual image may vary on the application on the source of energy which are known to be satisfactory is a coated film known as type 389 marketed by 3M (UK) Ltd, foodstuff dyes especially Erythrosine and Anstead Blue. In some circumstances it is possible by the application of a laser beam to effect writing or marking directly on to the printing layer, especially if said printing layer is a thermoplastic.

However, if the article within the packaging material is a perishable foodstuff the application of sufficient amount of energy to cause a printing onto the packaging material, may at the same time destroy part of that packaging material, and if the article has been vacuum packed it may destroy that vacuum and thus otherwise damage the article which has been packed within the packaging material. However the application of a source of energy to packaging material to vary the visual appearance of the packaging material may be satisfactory in other instances where the article is not of a perishable nature.

In order that the invention may be more readily understood reference is now made to the accompanying drawings in which :-

Figure 1 is a diagrammatic view illustrating a laser beam being applied to a package and means for focusing said laser beam;

Figure 2 is an alternative diagrammatic method of focusing a laser beam; and

Figures 3 and 4 are cross-sectional views of laminate packaging materials.

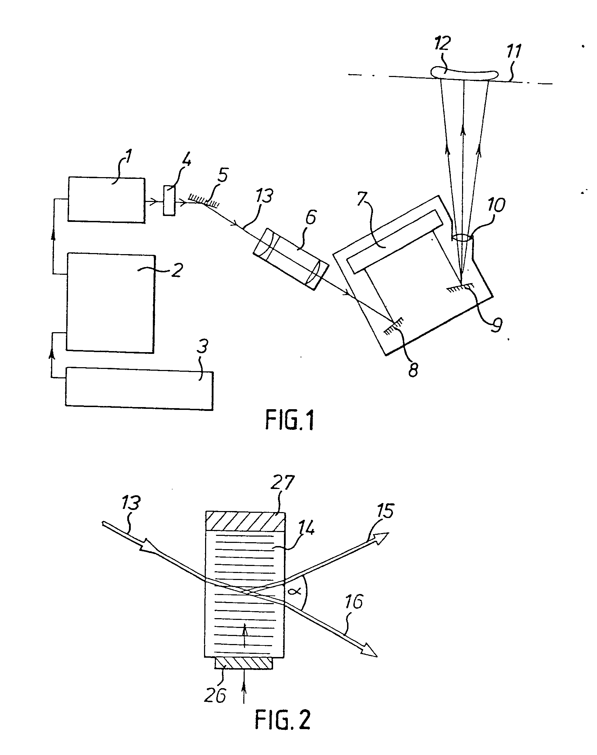

In Figure 1 a laser 1 which may be a Laakmann laser is driven from a radio frequency supply unit 2, controlled

5

by an electronic terminal 3. The beam 13 of the laser is fed through a safety shutter thence to a mirror 5 to deflect the beam downwardly to a beam expander 6 from the beam expander 6 the beam is then focused on to a first mirror 8. Thence through an image rotating device in the form of a prism 7 to a second mirror 9 and by appropriate angling of the mirrors 8 and 9 a beam movable two mutually perpendicular directions may be focused through a scanning lens 10 to provide writing on a package 12 indicates diagrammatically on a belt 11.

A laser scan of this kind or of the kind described with reference to Figure 1 has been developed by Laser Scan Limited of Cambridge, England, and is able to write characters of fine definition and of small size, i.e. twenty micron line width.

An alternative arrangement of focusing the laser beam 13 in Figure 2 has an electric transducer 14 controlled from a radio frequency input coil 26 and an accoustic absorber 27 to provide a split of the beam at 15 and 16 at an angle $\alpha$.

By applying the radio drive signal to the electric transducer 14 a travelling accoustic wave is sent out across the material. This produces a spacially periodic variation of the refractive index which acts as a defraction grating for a material with a fixed accoustic velocity. The accoustic wavelength or grating spacing is a function of the radio frequency drive signal, thus the deflection angle can be controlled by altering the drive signal.

The amplitude of the disturbance dictated by the power of the radio frequency signal in turn dictates the fractional quantity of optical energy deflected and may be used as an intensity control.

The electric transducer may be made of germanium and it may be desirable to have a second electric transducer 14 in order to defract the beam 15 through an angle which is in the plane normal to the angle $\alpha$ illustrated in Figure 2.

6

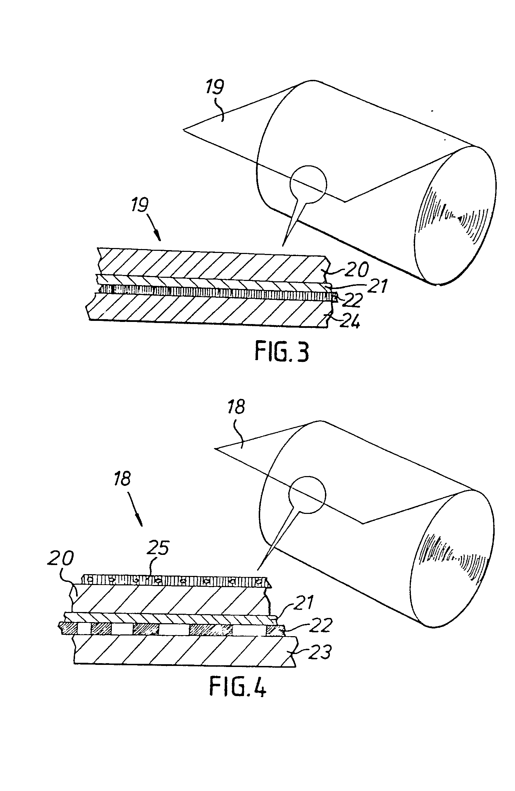

The substance whose visual appearance is adapted to change on the application of the source of energy may for example be sandwiched between layers forming a laminate of packaging material 19 as illustrated in Figure 3. The layer 20 may for example be polyethylene terephthalate (PET) which forms the outer layer of the packaging material laminate and if the packaging material is to be used for the vacuum packaging of perishable foodstuffs it is desirable to have a layer of poly-vinylidene dichloride 21 whose function is to act as a gas barrier to prevent any passage of oxygen through the PET or through the innermost layer 24 which will normally be a polyethylene. Between the polyethylene copolymer and the PVDC layer 21 will normally be the printing 22 for the packaging material. Hydrated ferric oxide or other desirable substances whose visual appearance varies on the application of a source of energy are incorporated in with the printing layer 22.

Alternatively in Figure 4 the outermost layer 20 of PET may have applied thereto a substance whose visual appearance varies on the application of the source of energy and in order to render that substance more stable starch granules may be incorporated therein as illustrated at 25 in Figure 4.

In alternative constructions the laser beam may be focused by first being directed to one mirror and then to a second mirror in which the second mirror is hinged about an axis at right angles to the axis of the first mirror, the two mirrors are then able to oscillate about the hinged axis and so deflect the beam in two mutually perpendicular planes.

The mirrors desirably will be connected to electric magnets or such like in order to oscillate them in their respective planes in order to direct and use the laser beam as a source of writing.

7

The laser beam strikes the substance whose visual appearance may change on the application of a source of energy such as hydrated ferric oxide. The oxide turns into the non-hydrated form and thus develops an image changing from a yellow substance to a red substance. The laser beam may be arranged to pass through the outer layer of the PET and with insufficient strength to cause any damage, either to that layer or to the PVDC layer.

In some instances it may be possible and even desirable to coat the foodstuff with an edible layer of material which can be developed by the application of a laser beam. It is thought for example it may be possible to coat a cake with an edible substance and then write characters or messages on top of the cake with a laser beam. Edible substances whose colour changes on the application of heat are available from D.F. Anstead Limited of Billericay, England.

While reference herein has been to hydrated ferric oxide for conversion to non-hydrated ferric oxide by the application of energy from a laser beam, it will be appreciated that other materials are known whose character may change according to the application of an energy source particularly that from a laser or by the application of heat which is also generated by a laser. For example, various substances are known which when applied to a surface will change according to the temperature of that surface.

The lasers which have been proved to be particularly successful with the image writing according to the present invention are $CO_2$ lasers Nd: YAG (Neodymium Yttrium Aluminium Garnet Lasers) also argon ion lasers may be used, all of which desirably operate at a wavelength between 200 nanometres and 12 microns and the power of the laser is clearly selected in order to cause the said substance to change its visual appearance but without otherwise causing damage either to the packaging material or the article contained within the packaging material. Such lasers may operate in the spectrum ranging from infra red to ultraviolet. Such Ng: YAG lasers are known to be manufactured by Quantrad Corporation of the United States. Suitable ink for printing onto packaging material as hereinbefore described containing ferric oxide is available commercially from Ault and Wiborg of Watford, England. If using an energy source in the ultraviolet region the substance which is applied to the packaging material may be Dylux obtainable from Dupont Inc. Wilmington, U.S.A.

In an alternative embodiment according to the present invention the material whose format is changed by the application of an energy source is an encapsulated material, such that on the application of the heat the skin of the capsule is broken and the substances within the capsules are released and such substances are arranged to interact with each other in order to form a permanent difference visual image from that of the surrounding material in which they are encapsulated.

Such substances are known as Action paper and may be available commercially from Wiggin Teape Ltd, alternatively the material which is encapsulated, may for example be a leuco dye in an oil solution, which will normally be colourless which dye is then encapsulated in a gelatinic substance or melamin-formaldeyde resin together with an electron donor such as P.O.P. resin or an activated bentonite.

9

In addition to providing the source of energy from a laser, other energy sources may be used as for example a sonic applicator. This would probably require physical contact between the sonic applicator and the package, or alternatively a heat probe may be provided. Physical contact with the package to be marked is necessary with a heat probe as for example a heated die. Other sustances whose format change on the application of energy are those which are particularly susceptible to ultraviolet light radiation. They may be painted or otherwsise provided on the package and then subjected to a source of ultraviolet radiation in order to develop the image and cause visual change for the information to be displayed on the package.

It is thought that the present invention provides a singular and substantial contribution to the art of marking and providing information on an article containing an article after insertion of the ar ticle into the package without causing damage to the article and provides variety and variation of the information which may be provided on the package both after packing and prior to storing, or storing and prior to sale.

10

CLAIMS.

1. A package comprising an article enclosed within packaging material characterised by the packaging material having applied thereto a substance which varies its visual appearance on application of a quantity of energy.

2. A package according to Claim 1 characterised by the substance being substantially invisible when applied to the packaging material and which substance becomes visible on the application of a quantity of energy.

3. A package according to either Claim 1 or Claim 2 characterised by the source of energy being a laser beam.

4. A package according to any of the Claims 1 to 3 characterised by the substance applied to the packaging material being hydrated ferric oxide.

5. A package according to any of the preceding claims in which the packaging material is laminate of different materials characterised by the substance applied to the packaging material being sandwiched between layers of the packaging material.

6. A package according to any of the Claims 1 to 4 characterised by the substance which varies its visual appearance being applied externally to the packaging material.

7. A package according to any of the Claims 3 to 6 characterised by the source of energy being a laser whose beam is focused onto said package to provide readable intelligence.

8. A package according to any of the Claims 3 to 7 characterised by the laser being directed onto the package to form bar coding intelligence on said package.

9. A package according to any of Claims 3 to 8 characterised by the laser being focused onto the package by a pair of hinged mirrors.

10. A package according to any of the Claims 3 to 9 characterised by the laser being a Neodymium Yttrium

11

Aluminium Garnet Laser.

11. A package according to any of the Claims 1 to 9 characterised by the laser being an Argon Ion Laser.

12. A package according to any of the Claims 2 to 11 characterised by the source of energy being derived from a laser operating between 200 nanometres and 12 microns.

13. A package according to Claims 1 or 2 characterised by the source of energy being a heat probe.

14. A package according to Claims 1 or 2 characterised by the source of energy being an ultrasonic applicator.

15. A package according to Claims 1 or 2 characterised by the energy source being a luminous electric discharge in a gas.

16. A package according to any of the preceding claims characterised by the substance which varies its visual appearance on the application of energy being an encapsulated leuco dye which breaks out of the capsule on the application of said source of energy.

17. A package according to any of the preceding claims characterised by the substance which varies its colour on the application of a source of energy comprising at least two layers of different colours such that the application of the energy source eliminates one or both of said colours to provide a colour coded marking on said package.

18. A package according to Claim 16 characterised by three colours being utilised.

19. A method of marking a package containing an article enclosed in packaging material characterised by providing the packaging material with a substance whose visual appearance may be varied on the application of the quantity of energy and applying a quantity of energy in specified form to said substance in order to change the said visual appearance.

20. A method according to Claim 19 characterised by the energy source first softening the substance which varies

12

its visual appearance and thereafter applying a marking substance to said softened substance.

21   A method according to Claim 19 or 20 characterised by the quantity of energy which is supplied to said substance is supplied by a laser beam.

22.   A method according to Claim 21 characterised by the laser beam being directed onto said package to provide readable characters by the application of hinged mirrors.

FIG.1

FIG.2

FIG.3

FIG.4

**European Patent Office**

# EUROPEAN SEARCH REPORT

EP 80304546.7

| Category | Citation of document with indication, where appropriate, of relevant passages | Relevant to claim |
|---|---|---|
| DOCUMENTS CONSIDERED TO BE RELEVANT | | |
| X | GB - A - 1 377 488 (KANZAKI PAPER M.)  + Totality + | 1,2,6, 14,16 |
| A | GB - A - 1 436 798 (FUJI PHOTO)  + Claim 1 + | 1,2 |
| A | DE - A - 1 960 959 (DU PONT)  + Claim 1; fig. 1-5 + | 3,7 |
| A | DE - A1 - 2 812 863 (B.R.I.C.)  + Page 5, lines 3-18 + | 1,2,6, 15,19 |

**CLASSIFICATION OF THE APPLICATION (Int. Cl.³)**

B 65 D 65/38
B 32 B 33/00

**TECHNICAL FIELDS SEARCHED (Int. Cl.³)**

B 65 D 65/00
B 32 B 33/00
B 41 M 5/00
G 02 F 7/00
C 09 B 67/00
C 09 K 11/00
G 02 B 27/00
G 01 D 15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search VIENNA | Date of completion of the search 09-03-1981 | Examiner JANC | |

EPO Form 1503.1  06.78